# EUROPEAN PATENT APPLICATION

(11) **EP 4 787 183 A1**
(43) Date of publication of application: **05.08.2026**
(21) Application number: 25217476.8
(22) Date of filing: 20.11.2025
(51) Int. Cl.: G06F 16/31, G06N 3/0475

(54) **SYSTEMS AND METHODS FOR GENERATIVE AI POWERED USE OF HIERARCHICAL DATA STRUCTURES**

(30) Priority: 29.01.2025 US 202563750907 P; 13.02.2025 US 202519052618
(71) Applicant: Palantir Technologies Inc., Aventura, Florida 33180 (US)
(72) Inventor: DOBERS, Simon, Munich (DE); BERNSDORFF, Jonas, Unterhaching (DE)
(74) Representative: Jolliffe, Jack Louis

(57) **Abstract**

In some examples, systems and methods for data mapping are provided. An example method includes a method for data mapping is provided. In some examples, the method includes receiving the unstructured data including text data; receiving one or more extracted data parts from the GenAI model; accessing a hierarchical data model, the hierarchical data model including one or more sub-hierarchies; generating a search prompt using the unstructured data and the one or more highest-level structure elements; providing the search prompt to the GenAI model; receiving one or more identified sub-hierarchies; for each data part of the one or more extracted data parts, traversing each identified sub-hierarchy of the one or more identified sub-hierarchies to determine a list of relevant structure elements in the hierarchical data model based on a relevance scoring; and generating a mapping prompt based on the list of relevant structure elements and the unstructured data.

## Description

This application claims priority U.S. Provisional Application No. 63/750,907, filed January 29, 2025.

### TECHNICAL FIELD

Certain embodiments of the present disclosure relate to use of data structures (e.g., data models). More particularly, certain embodiments of the present disclosure relate to generative artificial intelligence (AI) powered use of data structures (e.g., data models).

### BACKGROUND

In some examples, a hierarchical data model, also referred to as a hierarchical data structure, can be a way of organizing information in a structure where each data element is placed according to its relationship to other data elements. In certain examples, organizations have many unstructured data (e.g., maintenance reports, insurance claims, clinical encounter notes, etc.) to be used with hierarchical data models (e.g., maintenance data models, etc.).

Hence, it is desirable to improve techniques for the use of data models.

### SUMMARY

Certain embodiments of the present disclosure relate to use of data structures (e.g., data models). More particularly, certain embodiments of the present disclosure relate to generative artificial intelligence (AI) powered use of data models.

At least some aspects of the present disclosure are directed to a method for data mapping is provided. In some examples, the method includes receiving the unstructured data including text data; generating an extraction prompt using the unstructured data; providing the extraction prompt to a generative artificial intelligence (GenAI) model; receiving one or more extracted data parts from the GenAI model; for each data part of the one or more extracted data parts, generating a description prompt based on the each (or "the respective") data part; providing the description prompt to the GenAI model; receiving a keyword description for the each data part from the GenAI model; accessing a hierarchical data model, the hierarchical data model including one or more sub-hierarchies, at least one of the one or more sub-hierarchies including a plurality of levels of structure elements; obtaining one or more highest-level structure elements in the hierarchical data model, each highest-level structure element of the one or more highest-level structure elements corresponding to one of the one or more sub-hierarchies; generating a search prompt using the unstructured data and the one or more highest-level structure elements; providing the search prompt to the GenAI model; receiving one or more identified highest-level structure elements from the GenAI model, the one or more identified highest-level structure elements corresponding to one or more identified sub-hierarchies; for each data part of the one or more extracted data parts, traversing each identified sub-hierarchy of the one or more identified sub-hierarchies to determine a list of relevant structure elements in the hierarchical data model based on a relevance scoring; and generating a mapping prompt based on the list of relevant structure elements and the unstructured data. The method is performed using one or more processors.

At least some aspects of the present disclosure are directed to a system for data mapping is provided. In certain embodiments, the system includes: one or more memories comprising instructions stored thereon; and one or more processors configured to execute the instructions and perform a set of operations comprising: receiving the unstructured data including text data; generating an extraction prompt using the unstructured data; providing the extraction prompt to a generative artificial intelligence (GenAI) model; receiving one or more extracted data parts from the GenAI model; for each data part of the one or more extracted data parts, generating a description prompt based on the each data part; providing the description prompt to the GenAI model; receiving a keyword description for the each data part from the GenAI model; accessing a hierarchical data model, the hierarchical data model including one or more sub-hierarchies, at least one of the one or more sub-hierarchies including a plurality of levels of structure elements; obtaining one or more highest-level structure elements in the hierarchical data model, each highest-level structure element of the one or more highest-level structure elements corresponding to one of the one or more sub-hierarchies; generating a search prompt using the unstructured data and the one or more highest-level structure elements; providing the search prompt to the GenAI model; receiving one or more identified highest-level structure elements from the GenAI model, the one or more identified highest-level structure elements corresponding to one or more identified sub-hierarchies; for each data part of the one or more extracted data parts, traversing each identified sub-hierarchy of the one or more identified sub-hierarchies to determine a list of relevant structure elements in the hierarchical data model based on a relevance scoring; and generating a mapping prompt based on the list of relevant structure elements and the unstructured data.

At least some aspects of the present disclosure are directed to a non-transitory computer-readable storage medium having instructions for data mapping. In certain embodiments, the non-transitory computer-readable storage medium having instructions that, when executed by one or more processors, cause the one or more processors to perform a set of operations comprising: receiving the unstructured data including text data; generating an extraction prompt using the unstructured data; providing the extraction prompt to a generative artificial intelligence (GenAI) model; receiving one or more extracted data parts from the GenAI model; for each data part of the one or more extracted data parts, generating a description prompt based on the each data part; providing the description prompt to the GenAI model; receiving a keyword description for the each data part from the GenAI model; accessing a hierarchical data model, the hierarchical data model including one or more sub-hierarchies, at least one of the one or more sub-hierarchies including a plurality of levels of structure elements; obtaining one or more highest-level structure elements in the hierarchical data model, each highest-level structure element of the one or more highest-level structure elements corresponding to one of the one or more sub-hierarchies; generating a search prompt using the unstructured data and the one or more highest-level structure elements; providing the search prompt to the GenAI model; receiving one or more identified highest-level structure elements from the GenAI model, the one or more identified highest-level structure elements corresponding to one or more identified sub-hierarchies; for each data part of the one or more extracted data parts, traversing each identified sub-hierarchy of the one or more identified sub-hierarchies to determine a list of relevant structure elements in the hierarchical data model based on a relevance scoring; and generating a mapping prompt based on the list of relevant structure elements and the unstructured data.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

FIG. 1 is a simplified diagram showing a software architecture and/or workflow for GenAI powered data mapping according to certain embodiments of the present disclosure.
FIG. 2A and FIG. 2B is a simplified diagram showing a method for mapping unstructured data to hierarchical data structures (e.g., GenAI powered data mapping, etc.) according to certain embodiments of the present disclosure.
FIG. 3 is an illustrative GenAI powered data mapping environment 300 according to certain embodiments of the present disclosure.
FIG. 4 illustrates an example of a hierarchical data model (e.g., a hierarchical data structure) includes a plurality of levels of structure elements.
FIG. 5 is an example mapping prompt according to certain embodiments of the present disclosure.
FIG. 6 illustrates a simplified diagram showing a computing system for mapping unstructured data to hierarchical data structures (e.g., GenAI powered data mapping), according to certain embodiments of the present disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods cannot automatically map unstructured data to existing data structures. For example, conventional systems often rely on manual processes that are time-consuming and inefficient, particularly when entering unstructured data (e.g., maintenance reports, insurance claims, patient encounters) into data structures (e.g., tables, relational database, data objects, etc.). Conventional systems may also include legacy systems that have been around for many years and have significant data errors due to inconsistent data entry practices that have compounded over time. Manually entering this data is a daunting task that can introduce further inaccuracies, for example. Additionally, some conventional systems often rely on outdated information technology systems that cannot integrate with modern analytic tools, making data extraction and conversion a technically demanding and time-consuming process.

Various embodiments of the present disclosure can achieve benefits and/or improvement by a computing system for mapping unstructured data into existing data structures. In some embodiments, benefits include allowing automatically mapping the unstructured data, to improve efficiency. In certain embodiments, benefits include improved accuracy for mapping the unstructured data into the data structures. For example, a vehicle shop may include data models of different vehicles, different subsystems (e.g., engine subsystem, brake subsystem, energy supply subsystem, etc.), different components in a respective subsystem. In this example, a maintenance report including a replacement of a specific sensor can have a number of potential mappings into the data model for the vehicle (e.g., the vehicle having tens of sensors), where the data mapping system can identify the correct mapping. Additional and/or alternative benefits should be recognized by those of ordinary skill in the art, at least in light of the teachings provided herein.

According to certain embodiments, organizations (e.g., companies, etc.) and/or departments typically have a large corpus of unstructured information (e.g., highly unstructured information) available but work on a highly structured and/or complex data model (e.g., information model). In some embodiments, the unstructured data (e.g., unstructured information, etc.) can include internal communication, documentation, technical reports, customer interactions and/or the like. In certain embodiments, the structured data models can include data structures representing industry standards (e.g., data structures for power plants, data structures for grid networks, data structures for vehicle maintenance, data structures for insurance claims, etc.), custom data models (e.g., product component specifications, production plans, etc.). In some embodiments, the data models often cannot be used adequately since there is no connection between the unstructured data and the structured data models. For example, the unstructured data includes maintenance reports to map to product data models representing product being affected. As an example, the unstructured data includes an insurance claim to map to a decision tree representing insurance processing.

According to some embodiments, a technical solution to map unstructured data to structured data models is challenging for one or more reasons: 1) Volume and Complexity of Data: For example, an established company with a long history will have a vast amount of transactional data, encompassing numerous products and components. In some examples, sorting through millions of documents and parts to extract and organize relevant information requires substantial effort and advanced data management tools.
2) Data Inconsistency and Inaccuracy: For example, over the years, changes in data entry practices, systems, and personnel can lead to inconsistencies, errors, and incomplete data. In some examples, standardizing this data to achieve an accurate mapping to existing structures is non-trivial, such that it is difficult to map the unstructured data to the data models.
3). Legacy Systems: In some examples, companies may rely on outdated information technology systems that are not designed to interact seamlessly with data analytics tools. In certain examples, extracting data from these systems and converting it into a usable format can be a technically demanding and time-consuming process.
4) Resource Intensity: In some examples, the process of mapping out a data model (e.g., product, etc.) hierarchy accurately is resource-intensive, requiring skilled personnel, technology investment, and significant time commitment, which can be difficult for businesses to allocate if they are already operating at capacity.
5) Feedback Requirement: In certain examples, as organizations (e.g., companies) typically have a lot of internal knowledge (also referred to as expert knowledge), a system that creates relations as described above should have a feedback mechanism that can quickly adapt to user feedback and incorporate this into the future mapping processes.

According to certain embodiments, a semantic data mapping system (e.g., a software module, a software system) can include and/or access one or more computing models (e.g., one or more artificial intelligence (AI) models, one or more generative AI (GenAI) models, etc.), also referred to as data mapping models, for mapping unstructured data to existing data structures. In some embodiments, a model, also referred to as a computing model, includes a model to process data. A model includes, for example, an artificial intelligence (AI) model, a machine learning (ML) model, a deep learning (DL) model, an image processing model, an algorithm, a rule, other computing models, and/or a combination thereof. In certain embodiments, a GenAI (generative AI) data mapping model can map unstructured data to existing data structures.

In certain examples, a GenAI data mapping model can be trained using a large amount of training data (e.g., unstructured data, hierarchical data models, mapping data, validated mapping data, embeddings, vectors, similarity scores, relevance scores, TD-IDF (term frequency-inverse document frequency) scores, etc.). In some embodiments, the GenAI data mapping model includes a generative AI (artificial intelligence) model that is trained using a large amount of training data (e.g., corpus). In certain embodiments, a generative AI (GenAI) model is a type of AI model that can be used to produce various types of content, such as text, images, videos, audio, 3D (three-dimensional) data, 3D models, and/or the like. In some embodiments, a language model or a large language model (LLM), which is a type of GenAI models, can generate content (e.g., text, audio, video, or other form, etc.).

In some embodiments, the GenAI data mapping system includes a GenAI data mapping model that can be a language model ("LM") that may include an algorithm, rule, model, and/or other programmatic instructions that can predict the probability of a sequence of words or expressions (e.g., textual queries, summary, text strings, software code). In some embodiments, a language model may, given a starting text string (e.g., one or more words), predict the next word or expression in the sequence. In certain embodiments, a language model may calculate the probability of different word combinations and/or software code based on the patterns learned during training (e.g., based on a set of text data from books, articles, websites, audio files, software code, etc.).

In some embodiments, a language model may generate many combinations of one or more next words and/or expressions that are coherent and contextually relevant. In certain embodiments, a language model can be an artificial intelligence model that has been trained to understand, generate, and manipulate language (e.g., computing language expressions). In some embodiments, a language model can be useful for natural language processing, including receiving natural language prompts and providing natural language responses based on the text on which the model is trained. In certain embodiments, a language model may include an n-gram, exponential, positional, neural network, and/or other type of model. In some embodiments, a language model can be used to generate software code.

In certain embodiments, the GenAI data mapping system includes a GenAI data mapping model that can be a large language model (LLM), which was trained on a large data set and has a large number of parameters (e.g., billions of parameters, trillions of parameters, etc.). In certain embodiments, an LLM can understand more complex textual inputs and generate more coherent responses due to its extensive training. In certain embodiments, an LLM can use a transformer architecture that is a deep learning architecture using an attention mechanism (e.g., which inputs deserve more attention than others in certain cases). In some embodiments, a language model includes an autoregressive language model, such as a Generative Pretrained Transformer 3 (GPT-3) model, a GPT 3.5-turbo model, a GPT-4 model, a Claude model, a command-xlang model, a bidirectional encoder representations from transformers (BERT) model, a pathways language model (PaLM) 2, and/or the like.

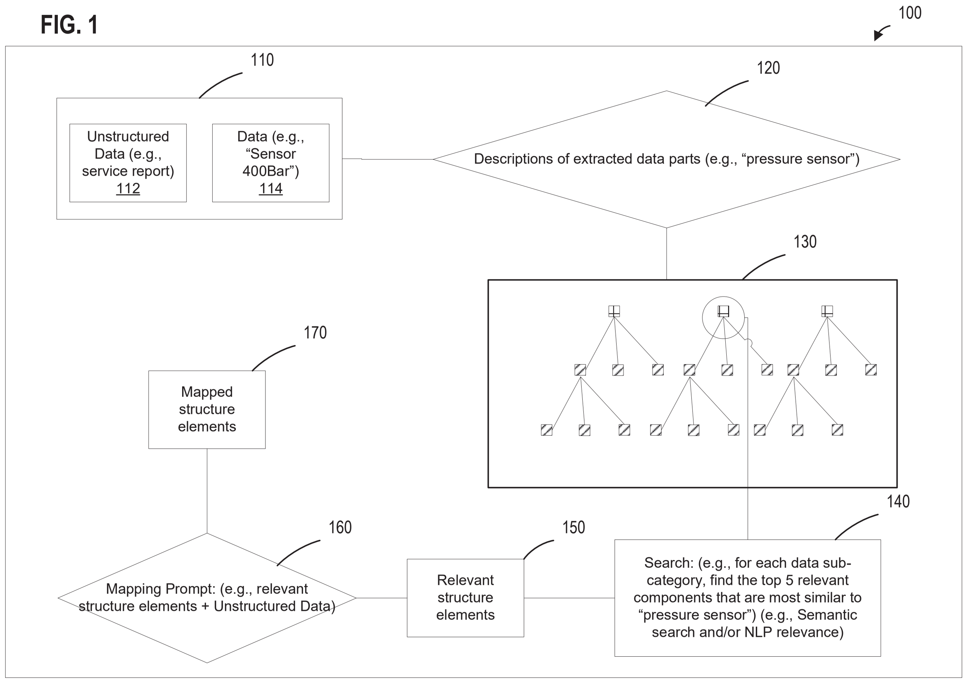

FIG. 1 is a simplified diagram showing a software architecture and/or workflow 100 for GenAI powered data mapping according to certain embodiments of the present disclosure. This diagram is merely an example. One of ordinary skill in the art would recognize many variations, alternatives, and modifications. The software architecture and/or workflow 100 for includes components and/or processes 110, 120, 130, 140, 150, 160, and 170. Although the above has been shown using a selected group of processes for the software architecture and/or workflow 100 for GenAI powered data mapping, there can be many alternatives, modifications, and variations. For example, some of the processes may be expanded and/or combined. Other processes may be inserted into those noted above. Depending upon the embodiments, the sequence of processes may be interchanged with others replaced. Further details of these processes are found throughout the present disclosure.

In some embodiments, some or all processes (e.g., steps) of the software architecture and/or workflow 100 are performed by a system (e.g., the computing system 600). In certain examples, some or all processes (e.g., steps) of the software architecture and/or workflow 100 are performed by a computer and/or a processor directed by a code. For example, a computer includes a server computer and/or a client computer (e.g., a personal computer). In some examples, some or all processes (e.g., steps) of the software architecture and/or workflow 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, the system receives unstructured data 112 and/or other data 114 at process 110. In certain embodiments, the unstructured data 112 includes data that is in natural language form and not in an existing structure form. In some embodiments, the input includes data 114 (e.g., "pressure sensor") that is associated with the unstructured data 112 (e.g., service report). In certain embodiments, the data 114 includes a data part that is a part of the unstructured data 112. For example, the service report includes that a pressure sensor 1234 has been replaced.

According to certain embodiments, organizations have complex data structures, also referred to as structured data models (e.g., the data model 130). In some embodiments, a structured data model (e.g., a data structure) includes a plurality of data objects (e.g., JSON objects). In certain embodiments, a structured data model includes a plurality of hierarchical data objects, where a parent data object has one or more child data objects. In some embodiments, the structured data model includes a plurality of hierarchical data objects, where a parent data object has one or more child data objects and a child data object has multiple parent data objects. In certain embodiments, the structured data models include one or more relational databases and/or object-oriented database. In some embodiments, the structured data models include data objects and/or components represented in XML (Extended Mark-Up Language). In certain examples, a data object is a table in a database. In some examples, a data object is an object notation (e.g., an object class, a JSON (JavaScript Object Notation) object, etc.) in a programming language (e.g., Java, etc.).

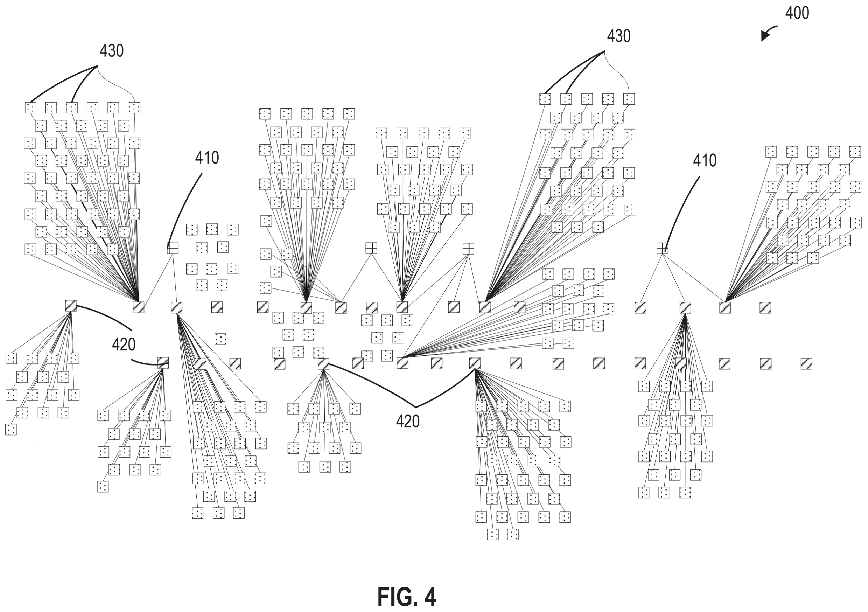

FIG. 4 illustrates an example of a hierarchical data model 400 (e.g., a data structure) includes a plurality of levels of structure elements. FIG. 4 is merely an example. One of ordinary skill in the art would recognize many variations, alternatives, and modifications. In this example, hierarchical data model 400 includes a first-level structure elements 410 (e.g., highest level structure elements), a second-level structure elements 420, and a third-level structure elements 430. In some examples, a first-level structure element 410 has one or more child structure elements, one or more second-level structure elements 420. In certain examples, a second-level structure element 420 has one or more child structure elements, one or more third-level structure elements 430. While three-levels are shown in this hierarchical data model 400, a hierarchical data model can include four or more levels of structure elements, or two or less levels of structure elements. In some examples, the hierarchical data model 400 has a graph structure where a child structure element can have a plurality of parent structure elements.

Referring back to FIG. 1, the system provides a technical solution for mapping unstructured data to existing data structures. For example, the system can create a mapping between maintenance reports and existing system graph. This approach is however directly applicable to a multitude of other problem settings. In some examples, without the use of the proposed solution, an organization (e.g., a company, a department, a government organization, etc.) can most of the time goes through each of the organization's documents manually to understand the details and create a mapping to an existing structure, which is obviously infeasible for the amounts of data and complexity organizations typically face.

According to some embodiments, the technical solution heavily relies on a GenAI model (e.g., LLMs, embeddings and completions) and classical NLP techniques such as TF-IDF (term-frequency-inverse-document-frequency). In certain examples, after receiving the unstructured data, to identify all possibly affected parts mentioned in a service report, one cannot simply prompt an LLM to give the answer, as this would lead to hallucinations and inconsistent answers and/or there would be no incremental improvement. In some examples, subset of the hierarchical data model 130 is shown. For example, the hierarchical data model 130 for a maintenance system can include a first-level of main system components, a second-level of intermediate components, a third-level of subsystems, and a fourth-level of subsystem parts.

According to certain embodiments, the system takes the unstructured data and use a GenAI model (e.g., an LLM) to extract one or more data parts. For example, the system takes in the maintenance report and uses an LLM to extract specific parts (e.g., pressure sensor, oil temperature sensor, etc.) named in the report. In some embodiments, the system is configured to generate a description prompt including the unstructured data and prompt sentences and/or phrases (e.g., "replace", "repair", etc.). As an example, if the maintenance report includes something like "I checked the pressure sensor, but it seemed fine", extracting the "pressure sensor" would be false.

According to some embodiments, the system prompts the GenAI model (e.g., the LLM) to generate a keyword description (e.g., a rough description) of data parts respectively (e.g., affected parts in a system, etc.) at process 120. In certain examples, the system gets one or more keyword descriptions (e.g., keyword-like rough understanding of what is in the report) corresponding to the one or more extracted data parts. In some embodiments, the system compute an embedding for each keyword description of the one or more keyword descriptions. In certain embodiments, the one or more keyword descriptions are generated by the GenAI model. In some embodiments, the one or more keyword descriptions are generated based on the unstructured data.

According to certain embodiments, the system accesses the hierarchical data model 130. In some embodiments, the system uses the GenAI model (e.g., the LLM) to take the highest-level of structure elements (e.g., main system structure elements, engine system structure elements, brake system structure elements etc.) in the hierarchical data model and the unstructured data (e.g., the maintenance report) to identify one or more relevant highest-level structure elements corresponding to one or more sub-hierarchies. In some embodiments, a sub-hierarchy is a data hierarchy associated with a structure element. In certain embodiments, a sub-hierarchy is a data hierarchy having a structure element as the root. In some embodiments, the system generates a search prompt using the unstructured data and one or more high-level structure elements. In certain embodiments, the system incorporates (e.g., infuses) context information (e.g., vehicle information, power plant information, etc.) in the search prompt. In some embodiments, the system receives one or more identified (e.g., relevant) highest-level structure elements corresponding to one or more identified sub-hierarchies from the GenAI model. In certain embodiment, the one or more identified highest-level structure elements and/or the one or more identified sub-hierarchies are identified by the GenAI model (e.g., the LLM). For example, it is important to look at all sub-systems where a "pressure sensor" might be used, then a drill down can be performed.

According to some embodiments, at process 140, the system traverses (e.g., drills down) the one or more identified sub-hierarchies to determine a list of relevant structure elements 150. In certain embodiments, the system traverses a plurality of identified sub-hierarchies in parallel (e.g., using parallel processing). In some examples, it is important to look at multiple paths in parallel since the maintenance report might refer to parts (e.g., a pressure sensor) from different systems (e.g., a brake system, an engine system, etc.).

In some embodiments, for every identified sub-hierarchy, the system identifies one or more relevant structure elements using semantic search between the embedding corresponding to an extracted data part and embeddings of the structure elements to determine the relevant structure elements. In certain embodiments, the system generates a similarity score between the embedding corresponding to an extracted data part and embeddings of the structure elements to determine the relevant structure elements. For example, the system gets a list of top-x possibly relevant structure elements (e.g., components) for each identified sub-hierarchy. In certain embodiments, the system computes an NLP relevance score (e.g., a TD-IDF relevance score) for the extracted data part (e.g., based on the keyword description) for each structure element in the identified sub-hierarchy and selects one or more relevant structure elements (e.g., one of the top NLP relevance scores, the NLP relevance score higher than a threshold, the NLP relevant score higher than a predetermined threshold, etc.).

According to certain embodiments, the system determines a relevance score between an extracted data part and a structure element based on both the semantic search (e.g., the similarity score) and the NLP relevance score. In some embodiments, the system generates the relevance score as a weighted score based on the similarity score and the NLP relevance score.

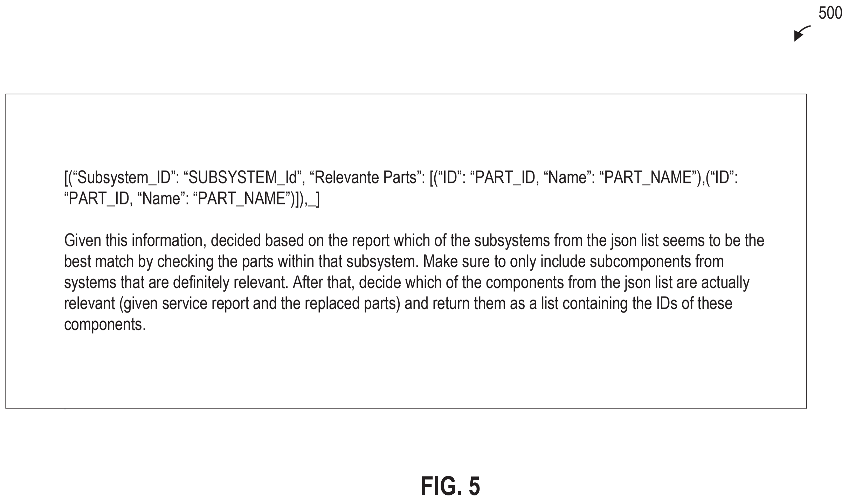

According to some embodiments, the system generates a mapping prompt based on the list of relevant structure elements at process 160. In certain embodiments, the system generates a mapping prompt based on the list of relevant structure elements and the unstructured data (e.g., the maintenance report, etc.) and/or the one or more extracted data parts (e.g., the keyword descriptions, the embeddings, etc.). FIG. 5 is an example mapping prompt 500 according to certain embodiments of the present disclosure. FIG. 5 is merely an example. One of ordinary skill in the art would recognize many variations, alternatives, and modifications. In this example, the mapping prompt includes one or more relevant structure elements, one or more extracted data parts, and other context information.

In some embodiments, the system provides the mapping prompt to the GenAI model (e.g., the LLM). In certain embodiments, at process 170, the GenAI model generates one or more mapped structure elements corresponding to the one or more extracted data parts based on the mapping prompt. In some embodiments, the system receives the one or more mapped structure elements (e.g., affected components in the service report). In certain embodiments, the system receives reasonings (e.g., detailed reasonings) for the mapping. In some embodiments, the system uses a combination of LLMs for understanding unstructured data, hierarchical model traversal (e.g., graph traversal), semantic search, and NLP relevance score to avoid hallucinations and/or ensure consistency of a GenAI model.

According to certain embodiments, the system uses a feedback loop to validate the mapped structure elements. In some embodiments, the system uses NLP relevance scores. In certain embodiments, the system uses TD-IDF (term-frequency-inverse-document-frequency) techniques.

According to some embodiments, the system provides the mapped structure elements to a user. In certain embodiments, if a user approves or corrects the one or more proposed mapped structure element (e.g., the decision), the system extracts one or more keywords that are relevant to the unstructured data (e.g., the service report, the maintenance report, etc.).

According to certain embodiments, the system appends the one or more keywords to a respective corpus associated with the mapped structured elements (e.g., affected components), for example, that have been verified. For example, if a first corpus for a first structure element "pressure sensor 1234" is "pressure sensor, pressure, 400, hydraulic, 400 bar, sensor" and a keyword "400" is validated, the first corpus for the first structure element "pressure sensor 1234" is updated to "pressure sensor, pressure, 400, hydraulic, 400 bar, sensor, 400". As an example, a second corpus for a second structure element "pressure sensor ABCD" is "pressure, 200, sensor, oil, tank, voltage" and the second corpus remains unchanged. In some embodiments, the first corpus and/or the second corpus are used in subsequent relevancy scoring. For example, a data part "pressure sensor 400" in a subsequent query will map to the first structure element with higher confidence.

According to some embodiments, if a new query (e.g., whether a data part maps to a structure element, etc.) is received, the system can compute a TF-IDF score for each structure element using the corresponding updated corpus. In certain embodiments, the TF-IDF score gives a relevance score indicating how relevant is the data part to the corpus of the structure element (e.g., subsystem A, etc.), for example, in a deterministic fashion.

According to certain embodiments, the system can generate and/or update corpus for a structure element based on validated user feedback. In some embodiments, the system computes a relevance score not only based on similarity score for an embedding for the data part, but also based on the NLP relevance score (e.g., the TD-IDF score). For example, the relevance score is a weighted sum of the similarity score and NLP relevance score (e.g., the TD-IDF score). In certain embodiments, after unstructured data mapped to hierarchical data structures (e.g., hierarchical data models), the system can generate insights (e.g., actions to be taken, etc.) from the hierarchical data structures.

According to some embodiments, the GenAI powered data mapping technical solution can have multiple applications. For example, the system can map maintenance/service report to a large set of possibly relevant components, allowing for insights such as:
What components are affected by what reasons most of the times?
Where should we plan regular maintenance due to early failure?
How severe is an incoming failure of a component based on past experiences?

In certain examples, the system can map customer interactions against existing structure of sales data, product data, and/or the like. In some examples, the system can generate a response when a new customer query comes in, for example, having a built mapping relationship. In certain examples, the system can solve a mapping problem between highly unstructured text and existing structured information using one or more embodiments describer in the present disclosure.

For example, the service report is from a technician of a power plant. In some examples, the power plant has thousands of (e.g., 25,000) service reports. As an example, the report indicates that the technician fixed something based on some error messages and/or some measures. In some examples, the service report (e.g., a vehicle maintenance report) can include a plurality of components being fixed or replaced. In certain examples, the system can map the large number of service reports to existing data structures. As discussed above and further emphasized here, FIG. 1 is merely an example. One of ordinary skill in the art would recognize many variations, alternatives, and modifications.

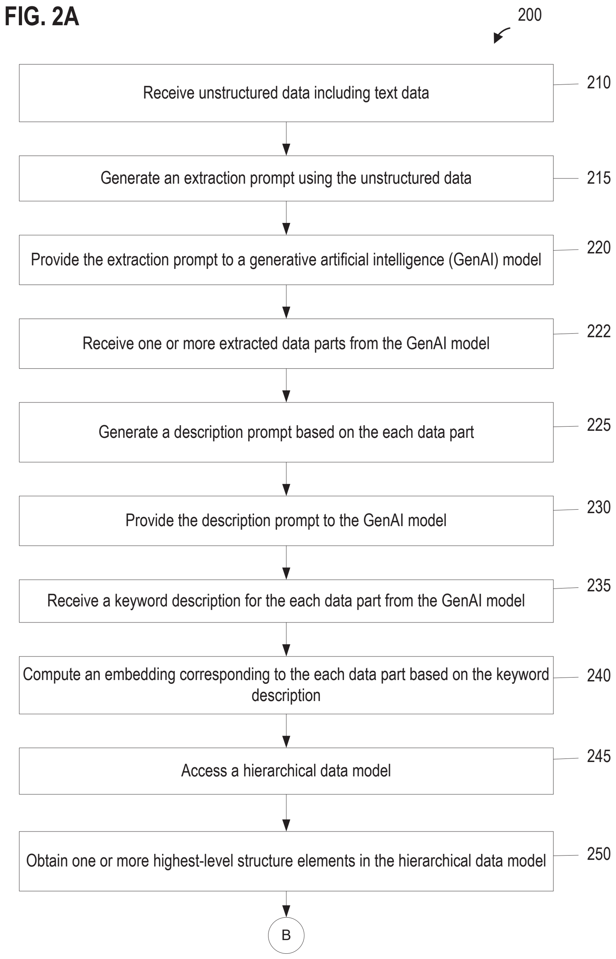

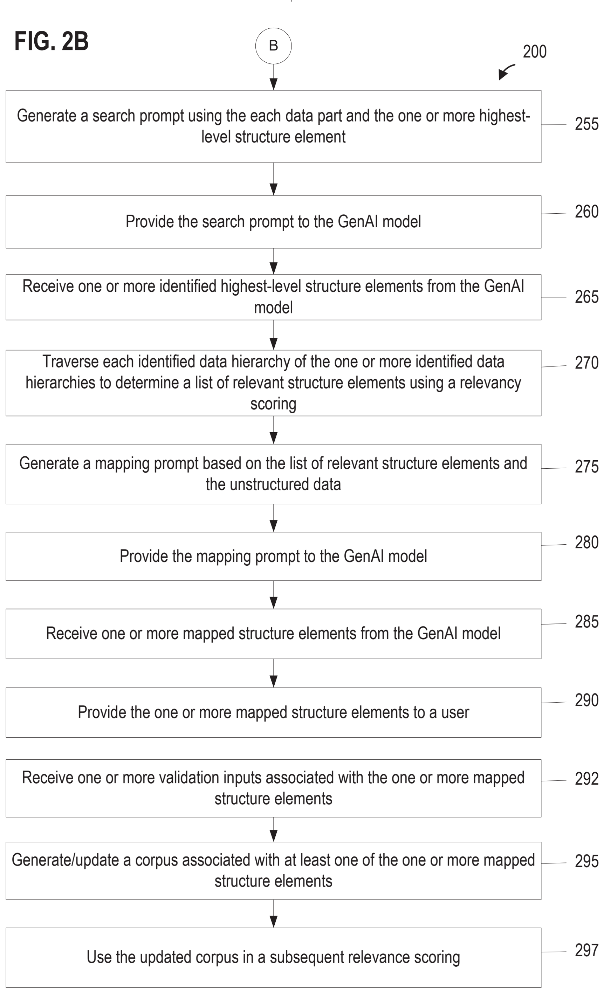

FIG. 2A and FIG. 2B is a simplified diagram showing a method 200 for mapping unstructured data to hierarchical data structures (e.g., GenAI powered data mapping, etc.) according to certain embodiments of the present disclosure. This diagram is merely an example. One of ordinary skill in the art would recognize many variations, alternatives, and modifications. The method 200 includes processes 210, 215, 220, 222, 225, 230, 235, 240, 245, 250, 255, 260, 265, 270, 275, 280, 285, 290, 295, and 297. Although the above has been shown using a selected group of processes for the method 200, there can be many alternatives, modifications, and variations. For example, some of the processes may be expanded and/or combined. Other processes may be inserted to those noted above. Depending upon the embodiment, the sequence of processes may be changed, and one or more processes may be replaced. Further details of these processes are found throughout the present disclosure.

In some embodiments, some or all processes (e.g., steps) of the method 200 are performed by a system (e.g., the computing system 600). In certain examples, some or all processes (e.g., steps) of the method 200 are performed by a computer and/or a processor directed by a code. For example, a computer includes a server computer and/or a client computer (e.g., a personal computer). In some examples, some or all processes (e.g., steps) of the method 200 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to certain embodiments, at process 210, the system receives and/or accesses unstructured data including text data. In some examples, the unstructured data includes a service report. In certain embodiments, at process 215, the system generates an extraction prompt using the unstructured data. In some embodiments, the extraction prompt includes instructions on how to extract data parts from the unstructured data, for example, not including data parts that are not changed. In certain embodiments, at process 220, the system provides the extraction prompt to a generative artificial intelligence (GenAI) model. In some embodiments, the GenAI model extracts one or more data parts (e.g., pressure sensors, etc.) from the unstructured data in response to receiving the extraction prompt.

According to some embodiments, at process 222, the system receives one or more extracted data parts from the GenAI model. In certain embodiments, at process 225, for each data part of the one or more extracted data parts, the system generates a description prompt based on the each data part. In certain embodiments, the description prompt includes an instruction of generating keyword-like description (e.g., rough description). In some embodiments, at process 230, the system provides the description prompt to the GenAI model. In certain embodiments, the GenAI model generates a keyword description for each data part in response to receiving the description prompt. In some embodiments, the GenAI model generates a keyword description for two or more extracted data parts in response to receiving the description prompt.

According to certain embodiments, at process 235, the system receives a keyword description for each data part from the GenAI model. In some embodiments, the system receives one or more keyword descriptions for the one or more extracted data parts. In certain embodiments, the system receives a keyword description for two or more extracted data parts. In some embodiments, at process 240, the system computes an embedding based on the keyword description.

According to some embodiments, at process 245, the system accesses a hierarchical data model (e.g., a hierarchical data structure). In certain embodiments, the hierarchical data model includes one or more sub-hierarchies, where at least one of the one or more sub-hierarchies includes a plurality of levels of structure elements. In some embodiments, a sub-hierarchy is a data hierarchy associated with a structure element. In certain embodiments, a sub-hierarchy is a data hierarchy having a structure element as the root.

FIG. 4 illustrates an example of a hierarchical data model 400 (e.g., a data structure) includes a plurality of levels of structure elements. FIG. 4 is merely an example. One of ordinary skill in the art would recognize many variations, alternatives, and modifications. In this example, hierarchical data model 400 includes a first-level structure elements 410 (e.g., highest level structure elements), a second-level structure elements 420, and a third-level structure elements 430. In some examples, a first-level structure element 410 has one or more child structure elements, one or more second-level structure elements 420. In certain examples, a second-level structure element 420 has one or more child structure elements, one or more third-level structure elements 430.

As illustrated, in some embodiments, a structure element 410 corresponds to a sub-hierarchy. Additionally, in certain embodiments, a structure element 420 corresponds to a sub-hierarchy. While three-levels are shown in this hierarchical data model 400, a hierarchical data model can include four or more levels of structure elements, or two or less levels of structure elements. In some examples, the hierarchical data model 400 has a graph structure where a child structure element can have a plurality of parent structure elements. In certain examples, each structure element includes an identifier (ID), a name, a corpus, one or more parent structure element IDs, one or more child structure element IDs, and/or other data fields (e.g., attributes, columns, etc.). In some examples, a structure element is represented as a node in a graph.

For example, the hierarchical data model 400 is associated with technical components. As an example, the hierarchical data model 400 includes a plurality of main system components 410 as the highest-level structure elements, a plurality of intermediate components 420 that are child structure elements of main system components 410, and subsystems components 430 (e.g., subsystems) that are child structure elements of intermediate components 420.

As an example, the hierarchical data model 400 is associated with insurance claims. For example, an insurance claim can include different types of claims 410, such as claims for car accidents and animal claims. As an example, a type of claim 410 can be car accidents 420 that include crashes and weather-related accidences 430.

Referring back to FIG. 2, according to certain embodiments, at process 250, the system obtains one or more highest-level structure elements in the hierarchical data model, each highest-level structure element of the one or more highest-level structure elements corresponding to one of the one or more sub-hierarchies. In the example illustrated in FIG. 4, the highest-level structure elements 410 are identified.

According to some embodiments, at process 255, the system generates a search prompt using the unstructured data and the one or more highest-level structure elements. In certain embodiments, the search prompt includes the one or more keyword descriptions corresponding to the one or more extracted data parts. In some embodiments, the system incorporates context information (e.g., the vehicle information, the power plant information, the accident information, etc.) into the search prompt. In certain embodiments, the context information includes information related to the unstructured data. In certain embodiments, the context information includes additional descriptions related to the extracted data part (e.g., hydraulic, etc.). In some embodiments, the context information includes additional descriptions related to the extracted data part (e.g., hydraulic, etc.) described in the unstructured data.

According to certain embodiments, the system provides the search prompt to the GenAI model. In some embodiments, the GenAI model identifies one or more highest-level structure elements and/or one or more sub-hierarchies that are relevant to the unstructured data in response to receiving the search prompt. For example, the data part is a pressure sensor and the GenAI model identifies which subsystems, for example, corresponding to sub-hierarchies, may include a pressure sensor.

According to some embodiments, at process 265, the system receives one or more identified highest-level structure elements from the GenAI model, where the one or more identified highest-level structure elements correspond to one or more identified sub-hierarchies. In certain embodiments, at process 270, for each data part of the one or more extracted data parts, the system traverses each identified sub-hierarchy of the one or more identified sub-hierarchies to determine a list of relevant structure elements in the hierarchical data model using a relevance scoring. In some embodiments, the relevance scoring is to determine a relevance score. In certain embodiments, the system traverses a plurality of identified sub-hierarchies in parallel (e.g., using parallel processing). In some embodiments, the system traverses a sub-hierarchy to every leaf structure element that does not have any child structure element.

According to some embodiments, for each data part of the one or more extracted data parts, the system determines a relevance score for each structure element in the each identified sub-hierarchy using semantic search and/or NLP scoring. In certain embodiments, the system determines a similarity score (e.g., semantic similarity score) based on the embedding corresponding to the each extracted data part and an embedding corresponding to the each structure element. In some embodiments, the system determines the relevance score based on the similarity score.

In certain embodiments, the system determines an NLP (natural-language-processing) relevance score based on the keyword description corresponding to the each extracted data part and a corpus corresponding to the each structure element. In some embodiments, the NLP relevance score includes a TF-IDF (term-frequency-inverse-document-frequency) score. In certain embodiments, the TF-IDF score gives a relevance score indicating how relevant is the data part to the corpus of the structure element (e.g., subsystem A, etc.), for example, in a deterministic fashion.

In certain embodiments, the system determines the relevance score based on the NLP relevance score. In some embodiments, the system determines the relevance score based on the NLP relevance score and the similarity score. In certain embodiments, the relevance score is a weighted score based on the NLP relevance score and the similarity score. In certain embodiments, the relevance score is a weighted sum of the NLP relevance score and the similarity score.

According to some embodiments, the system selects a list of relevant structure elements based on determined relevance scores. In certain embodiments, the system selects a list of relevant structure elements, where each relevant structure element has a determined relevance scores meeting one or more selection criteria. In some embodiments, the one or more selection criteria includes a criterion of a relevance score within top N relevance scores (e.g., top 5 relevance scores), wherein N is an integer. In certain embodiments, the one or more selection criteria includes a criterion of a relevance score higher than a predetermined threshold. In certain embodiments, the search prompt includes one extracted data part at a time, and processes 255, 260, 265, and 270 are repeated for each extracted data part to generate the list of relevant structure elements.

According to certain embodiments, at process 275, the system generates a mapping prompt based on the list of relevant structure elements and the unstructured data. In certain embodiments, the system generates a mapping prompt based on the list of relevant structure elements and the unstructured data (e.g., the maintenance report, etc.) and/or the one or more extracted data parts (e.g., the keyword descriptions, the embeddings, etc.). FIG. 5 is an example mapping prompt 500 according to certain embodiments of the present disclosure. FIG. 5 is merely an example. One of ordinary skill in the art would recognize many variations, alternatives, and modifications. In this example, the mapping prompt includes one or more relevant structure elements, one or more extracted data parts, and other context information.

According to some embodiments, at process 280, the system provides the mapping prompt to the GenAI model. In certain embodiments, the GenAI model determines one or more mapped structure elements (e.g., a decision) corresponding to the one or more extracted data parts based on the mapping prompt. In some embodiments, at process 285, the system receives one or more mapped structure elements corresponding to the one or more extracted data parts from the GenAI model. In certain embodiments, after unstructured data mapped to hierarchical data structures (e.g., hierarchical data models), the system can generate insights (e.g., actions to be taken, etc.) from the hierarchical data structures.

According to certain embodiments, at process 290, the system provides the one or more mapped structure elements to a user. In certain embodiments, at process 292, the system receives one or more validation inputs associated with the one or more mapped structure element. In some embodiments, at process 295, the system generates and/or updates a corpus associated with at least one of the one or more mapped structure elements. In certain embodiments, at process 297, the system uses the updated corpus in a subsequent relevance scoring. In some embodiments, if a new query (e.g., whether a data part maps to a structure element, etc.) is received, the system can compute a TF-IDF score for each structure element using the corresponding updated corpus.

According to some embodiments, in response to the validation input indicating an approval to a mapped structure element, generating a keyword based on the validation input and the mapped structure element. In certain embodiments, in response to the input not indicating an approval, generating a keyword based on the input. In some embodiments, the system appends the keyword to a corpus associated with a structure element different from the mapped structure element.

In certain embodiments, the system appends the keyword to a corpus associated with the mapped structure element. For example, if a first corpus for a first structure element "pressure sensor 1234" is "pressure sensor, pressure, 400, hydraulic, 400 bar, sensor" and a keyword "400" is validated, the first corpus for the first structure element "pressure sensor 1234" is updated to "pressure sensor, pressure, 400, hydraulic, 400 bar, sensor, 400". As an example, a second corpus for a second structure element "pressure sensor ABCD" is "pressure, 200, sensor, oil, tank, voltage" and the second corpus remains unchanged. In some embodiments, the first corpus and/or the second corpus are used in subsequent relevancy scoring. For example, a data part "pressure sensor 400" in a subsequent query will map to the first structure element with higher confidence.

According to some embodiments, the system receives a configuration input to the hierarchical data model, for example, to customize the hierarchical data model. In certain embodiments, the system updates the hierarchical data model based on the configuration input. For example, the system has a hierarchical data model for a wind power plant, and the system can update the hierarchical data model for a nuclear power plant based on the configuration input.

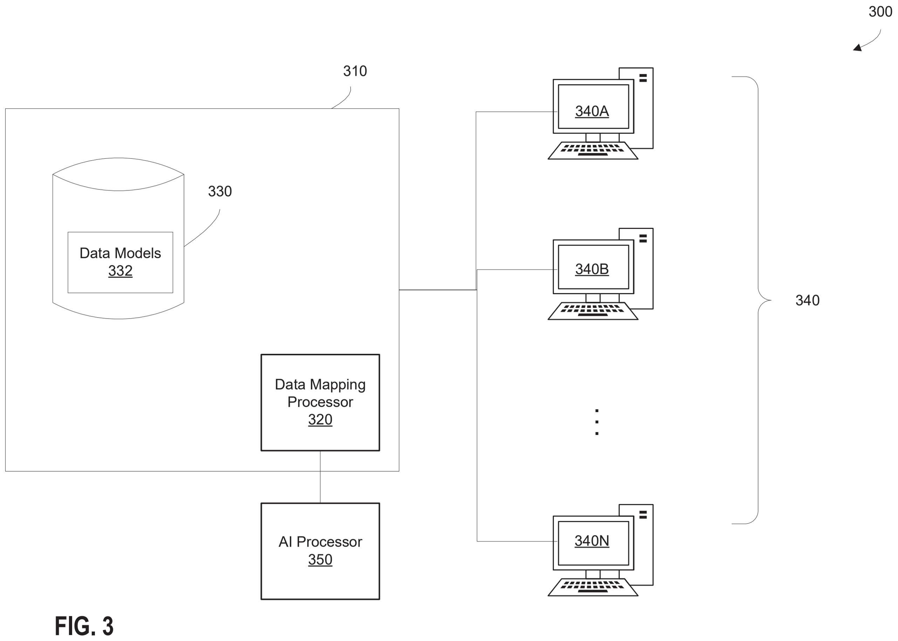

FIG. 3 is an illustrative GenAI powered data mapping environment 300 according to certain embodiments of the present disclosure. FIG. 3 is merely an example. One of ordinary skill in the art would recognize many variations, alternatives, and modifications. In some embodiments, the GenAI powered data mapping environment 300 includes one or more data mapping systems 310 and one or more computing devices 340 (e.g., computing device 340A, computing device 340B, ... computing device 340N, etc.). In certain embodiments, the data mapping system 310 includes one or more data mapping processor 320, one or more displays 327, and one or more data repositories 330. In some embodiments, the GenAI powered data mapping environment 300 includes one or more AI processors 350 running one or more GenAI models, such as one or more GenAI data mapping models.

In some embodiments, the one or more data repositories 330 include one or more data models 332, for example, hierarchical data structures, hierarchical data models. In certain embodiments, the computing device 340 may include and/or access at least a part of the functionality of the data mapping system 310. Although the above has been shown using a selected group of components in the GenAI powered data mapping environment 300, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to certain embodiments, the data mapping system 310 and/or the data mapping processor 320 receives and/or accesses unstructured data including text data, for example, from a computing device 340. In some examples, the unstructured data includes a service report. In certain embodiments, the data mapping system 310 and/or the data mapping processor 320 generates an extraction prompt using the unstructured data. In some embodiments, the extraction prompt includes instructions on how to extract data parts from the unstructured data, for example, not including data parts that are not changed. In certain embodiments, the data mapping system 310 and/or the data mapping processor 320 provides the extraction prompt to the AI processor 350 running a generative artificial intelligence (GenAI) model. In some embodiments, the GenAI model extracts one or more data parts (e.g., pressure sensors, etc.) from the unstructured data in response to receiving the extraction prompt.

According to some embodiments, the data mapping system 310 and/or the data mapping processor 320 receives one or more extracted data parts from the GenAI model running on the AI processors 350. In certain embodiments, for each data part of the one or more extracted data parts, the data mapping system 310 and/or the data mapping processor 320 generates a description prompt based on the each data part. In certain embodiments, the description prompt includes an instruction of generating keyword-like description (e.g., rough description). In some embodiments, the data mapping system 310 and/or the data mapping processor 320 provides the description prompt to the GenAI model. In certain embodiments, the GenAI model generates a keyword description for each data part in response to receiving the description prompt. In some embodiments, the GenAI model generates a keyword description for two or more extracted data parts in response to receiving the description prompt.

According to certain embodiments, the data mapping system 310 and/or the data mapping processor 320 receives a keyword description for each data part from the GenAI model running on the AI processor 350. In some embodiments, the data mapping system 310 and/or the data mapping processor 320 receives one or more keyword descriptions for the one or more extracted data parts. In certain embodiments, the data mapping system 310 and/or the data mapping processor 320 receives a keyword description for two or more extracted data parts. In some embodiments, the data mapping system 310 and/or the data mapping processor 320 computes an embedding based on the keyword description.

According to some embodiments, the data mapping system 310 and/or the data mapping processor 320 accesses a hierarchical data model (e.g., a hierarchical data structure). In certain embodiments, the hierarchical data model includes one or more sub-hierarchies, where at least one of the one or more sub-hierarchies includes a plurality of levels of structure elements. In some embodiments, a sub-hierarchy is a data hierarchy associated with a structure element. In certain embodiments, a sub-hierarchy is a data hierarchy having a structure element as the root.

FIG. 4 illustrates an example of a hierarchical data model 400 (e.g., a data structure) includes a plurality of levels of structure elements. FIG. 4 is merely an example. One of ordinary skill in the art would recognize many variations, alternatives, and modifications. In this example, hierarchical data model 400 includes a first-level structure elements 410 (e.g., highest level structure elements), a second-level structure elements 420, and a third-level structure elements 430. In some examples, a first-level structure element 410 has one or more child structure elements, one or more second-level structure elements 420. In certain examples, a second-level structure element 420 has one or more child structure elements, one or more third-level structure elements 430.

As illustrated, in some embodiments, a structure element 410 corresponds to a sub-hierarchy. Additionally, in certain embodiments, a structure element 420 corresponds to a sub-hierarchy. While three-levels are shown in this hierarchical data model 400, a hierarchical data model can include four or more levels of structure elements, or two or less levels of structure elements. In some examples, the hierarchical data model 400 has a graph structure where a child structure element can have a plurality of parent structure elements. In certain examples, each structure element includes an identifier (ID), a name, a corpus, one or more parent structure element IDs, one or more child structure element IDs, and/or other data fields (e.g., attributes, columns, etc.). In some examples, a structure element is represented as a node in a graph.

For example, the hierarchical data model 400 is associated with technical components. As an example, the hierarchical data model 400 includes a plurality of main system components 410 as the highest-level structure elements, a plurality of intermediate components 420 that are child structure elements of main system components 410, and subsystems components 430 (e.g., subsystems) that are child structure elements of intermediate components 420.

As an example, the hierarchical data model 400 is associated with insurance claims. For example, an insurance claim can include different types of claims 410, such as claims for car accidents and animal claims. As an example, a type of claim 410 can be car accidents 420 that include crashes and weather-related accidences 430.

Referring back to FIG. 3, according to certain embodiments, the data mapping system 310 and/or the data mapping processor 320 obtains one or more highest-level structure elements in the hierarchical data model, each highest-level structure element of the one or more highest-level structure elements corresponding to one of the one or more sub-hierarchies. In the example illustrated in FIG. 4, the highest-level structure elements 410 are identified.

According to some embodiments, the data mapping system 310 and/or the data mapping processor 320 generates a search prompt using the unstructured data and the one or more highest-level structure elements. In certain embodiments, the search prompt includes the one or more keyword descriptions corresponding to the one or more extracted data parts. In some embodiments, the data mapping system 310 and/or the data mapping processor 320 incorporates context information (e.g., the vehicle information, the power plant information, the accident information, etc.) into the search prompt. In certain embodiments, the context information includes information related to the unstructured data. In certain embodiments, the context information includes additional descriptions related to the extracted data part (e.g., hydraulic, etc.). In some embodiments, the context information includes additional descriptions related to the extracted data part (e.g., hydraulic, etc.) described in the unstructured data.

According to certain embodiments, the data mapping system 310 and/or the data mapping processor 320 provides the search prompt to the GenAI model. In some embodiments, the GenAI model identifies one or more highest-level structure elements and/or one or more sub-hierarchies that are relevant to the unstructured data in response to receiving the search prompt. For example, the data part is a pressure sensor and the GenAI model identifies which subsystems, for example, corresponding to sub-hierarchies, may include a pressure sensor.

According to some embodiments, the data mapping system 310 and/or the data mapping processor 320 receives one or more identified highest-level structure elements from the GenAI model running on the AI processor 350, where the one or more identified highest-level structure elements correspond to one or more identified sub-hierarchies. In certain embodiments, for each data part of the one or more extracted data parts, the data mapping system 310 and/or the data mapping processor 320 traverses each identified sub-hierarchy of the one or more identified sub-hierarchies to determine a list of relevant structure elements in the hierarchical data model using a relevance scoring. In some embodiments, the relevance scoring is to determine a relevance score. In certain embodiments, the data mapping system 310 and/or the data mapping processor 320 traverses a plurality of identified sub-hierarchies in parallel (e.g., using parallel processing). In some embodiments, the data mapping system 310 and/or the data mapping processor 320 traverses a sub-hierarchy to every leaf structure element that does not have any child structure element.

According to some embodiments, for each data part of the one or more extracted data parts, the data mapping system 310 and/or the data mapping processor 320 determines a relevance score for each structure element in the each identified sub-hierarchy using semantic search and/or NLP scoring. In certain embodiments, the data mapping system 310 and/or the data mapping processor 320 determines a similarity score (e.g., semantic similarity score) based on the embedding corresponding to the each extracted data part and an embedding corresponding to the each structure element. In some embodiments, the data mapping system 310 and/or the data mapping processor 320 determines the relevance score based on the similarity score.

In certain embodiments, the data mapping system 310 and/or the data mapping processor 320 determines an NLP (natural-language-processing) relevance score based on the keyword description corresponding to the each extracted data part and a corpus corresponding to the each structure element. In some embodiments, the NLP relevance score includes a TF-IDF (term-frequency-inverse-document-frequency) score. In certain embodiments, the TF-IDF score gives a relevance score indicating how relevant is the data part to the corpus of the structure element (e.g., subsystem A, etc.), for example, in a deterministic fashion.

In certain embodiments, the data mapping system 310 and/or the data mapping processor 320 determines the relevance score based on the NLP relevance score. In some embodiments, the data mapping system 310 and/or the data mapping processor 320 determines the relevance score based on the NLP relevance score and the similarity score. In certain embodiments, the relevance score is a weighted score based on the NLP relevance score and the similarity score. In certain embodiments, the relevance score is a weighted sum of the NLP relevance score and the similarity score.

According to some embodiments, the data mapping system 310 and/or the data mapping processor 320 selects a list of relevant structure elements based on determined relevance scores. In certain embodiments, the data mapping system 310 and/or the data mapping processor 320 selects a list of relevant structure elements, where each relevant structure element has a determined relevance scores meeting one or more selection criteria. In some embodiments, the one or more selection criteria includes a criterion of a relevance score within top N relevance scores (e.g., top 5 relevance scores), wherein N is an integer. In certain embodiments, the one or more selection criteria includes a criterion of a relevance score higher than a predetermined threshold. In certain embodiments, the search prompt includes one extracted data part at a time, and processes 255, 260, 265, and 270 are repeated for each extracted data part to generate the list of relevant structure elements.

According to certain embodiments, the data mapping system 310 and/or the data mapping processor 320 generates a mapping prompt based on the list of relevant structure elements and the unstructured data. In certain embodiments, the data mapping system 310 and/or the data mapping processor 320 generates a mapping prompt based on the list of relevant structure elements and the unstructured data (e.g., the maintenance report, etc.) and/or the one or more extracted data parts (e.g., the keyword descriptions, the embeddings, etc.). FIG. 5 is an example mapping prompt 500 according to certain embodiments of the present disclosure. FIG. 5 is merely an example. One of ordinary skill in the art would recognize many variations, alternatives, and modifications. In this example, the mapping prompt includes one or more relevant structure elements, one or more extracted data parts, and other context information.

According to some embodiments, the data mapping system 310 and/or the data mapping processor 320 provides the mapping prompt to the GenAI model. In certain embodiments, the GenAI model determines one or more mapped structure elements (e.g., a decision) corresponding to the one or more extracted data parts based on the mapping prompt. In some embodiments, the data mapping system 310 and/or the data mapping processor 320 receives one or more mapped structure elements corresponding to the one or more extracted data parts from the GenAI model running on the AI processor 350. In certain embodiments, after unstructured data mapped to hierarchical data structures (e.g., hierarchical data models), the data mapping system 310 and/or the data mapping processor 320 can generate insights (e.g., actions to be taken, etc.) from the hierarchical data structures.

According to certain embodiments, the data mapping system 310 and/or the data mapping processor 320 provides the one or more mapped structure elements to a user. In certain embodiments, the data mapping system 310 and/or the data mapping processor 320 receives one or more validation inputs associated with the one or more mapped structure element. In some embodiments, the data mapping system 310 and/or the data mapping processor 320 generates and/or updates a corpus associated with at least one of the one or more mapped structure elements. In certain embodiments, the data mapping system 310 and/or the data mapping processor 320 uses the updated corpus in a subsequent relevance scoring. In some embodiments, if a new query (e.g., whether a data part maps to a structure element, etc.) is received, the data mapping system 310 and/or the data mapping processor 320 can compute a TF-IDF score for each structure element using the corresponding updated corpus.

According to some embodiments, in response to the validation input indicating an approval to a mapped structure element, generating a keyword based on the validation input and the mapped structure element. In certain embodiments, in response to the input not indicating an approval, generating a keyword based on the input. In some embodiments, the data mapping system 310 and/or the data mapping processor 320 appends the keyword to a corpus associated with a structure element different from the mapped structure element.

In certain embodiments, the data mapping system 310 and/or the data mapping processor 320 appends the keyword to a corpus associated with the mapped structure element. For example, if a first corpus for a first structure element "pressure sensor 1234" is "pressure sensor, pressure, 400, hydraulic, 400 bar, sensor" and a keyword "400" is validated, the first corpus for the first structure element "pressure sensor 1234" is updated to "pressure sensor, pressure, 400, hydraulic, 400 bar, sensor, 400". As an example, a second corpus for a second structure element "pressure sensor ABCD" is "pressure, 200, sensor, oil, tank, voltage" and the second corpus remains unchanged. In some embodiments, the first corpus and/or the second corpus are used in subsequent relevancy scoring. For example, a data part "pressure sensor 400" in a subsequent query will map to the first structure element with higher confidence.

According to some embodiments, the data mapping system 310 and/or the data mapping processor 320 receives a configuration input to the hierarchical data model, for example, to customize the hierarchical data model. In certain embodiments, the data mapping system 310 and/or the data mapping processor 320 updates the hierarchical data model based on the configuration input. For example, the data mapping system 310 and/or the data mapping processor 320 has a hierarchical data model for a wind power plant, and the data mapping system 310 and/or the data mapping processor 320 can update the hierarchical data model for a nuclear power plant based on the configuration input.

In some embodiments, the one or more repositories 330 can include one or more data models, one or more embeddings, one or more relevance scores, unstructured data, hierarchical data models, mapping data, validated mapping data, embeddings, vectors, similarity scores, relevance scores, TD-IDF scores, NLP scores, context information, prompts (e.g., extraction prompts, description prompts, search prompts, mapping prompts, etc.) and/or the like. The repository may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central. In some cases, various components in the GenAI powered data mapping environment 300 can execute software or firmware stored in non-transitory computer-readable medium to implement various processing steps. Various components and processors of the GenAI powered data mapping environment 300 can be implemented by one or more computing devices including, but not limited to, circuits, a computer, a cloud-based processing unit, a processor, a processing unit, a microprocessor, a mobile computing device, and/or a tablet computer. In some cases, various components referenced by the GenAI powered data mapping environment 300 (e.g., the one or more data mapping systems 310, the one or more data mapping processor 320, the one or more computing devices 340, etc.) can be implemented on a shared computing device. Alternatively, a component of the GenAI powered data mapping environment 300 can be implemented on multiple computing devices. In some implementations, various modules and components referenced by the GenAI powered data mapping environment 300 can be implemented as software, hardware, firmware, or a combination thereof. In some cases, various components referenced by the GenAI powered data mapping environment 300 can be implemented in software or firmware executed by a computing device.

Various components referenced by GenAI powered data mapping environment 300 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as an intranet, or on a public computer network, such as the Internet.

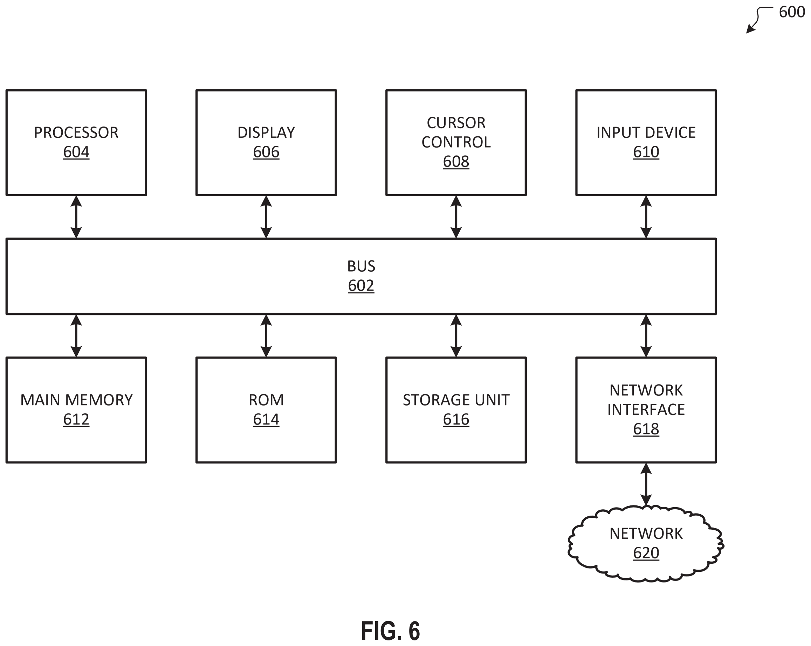

FIG. 6 is a simplified diagram showing a computing system for implementing a system 600 for mapping unstructured data to hierarchical data structures (e.g., GenAI powered data mapping) in accordance with at least one example set forth in the disclosure. This diagram is merely an example, which should not unduly limit the scope of the claims. One of ordinary skill in the art would recognize many variations, alternatives, and modifications.

The computing system 600 includes a bus 602 or other communication mechanism for communicating information, a processor 604, a display 606, a cursor control component 608, an input device 610, a main memory 612, a read only memory (ROM) 614, a storage unit 616, and a network interface 618. In some embodiments, some or all processes (e.g., steps) of methods and/or processes (e.g., the workflow 100, the method 200, etc.) disclosed herein are performed by the computing system 600. In some embodiments, the bus 602 is coupled to the processor 604, the display 606, the cursor control component 608, the input device 610, the main memory 612, the read only memory (ROM) 614, the storage unit 616, and/or the network interface 618. In certain embodiments, the network interface is coupled to a network 620. For example, the processor 604 includes one or more general purpose microprocessors. In some embodiments, the main memory 612 (e.g., random access memory (RAM), cache and/or other dynamic storage devices) is configured to store information and instructions to be executed by the processor 604. In certain embodiments, the main memory 612 is configured to store temporary variables or other intermediate information during execution of instructions to be executed by processor 604. For example, the instructions, when stored in the storage unit 616 accessible to processor 604, render the computing system 600 into a special-purpose machine that is customized to perform the operations specified in the instructions. In some embodiments, the ROM 614 is configured to store static information and instructions for the processor 604. In certain embodiments, the storage unit 616 (e.g., a magnetic disk, optical disk, or flash drive) is configured to store information and instructions.

In some embodiments, the display 606 (e.g., a cathode ray tube (CRT), an LCD display, or a touch screen) is configured to display information to a user of the computing system 600. In some embodiments, the input device 610 (e.g., alphanumeric and other keys) is configured to communicate information and commands to the processor 604. For example, the cursor control component 608 (e.g., a mouse, a trackball, or cursor direction keys) is configured to communicate additional information and commands (e.g., to control cursor movements on the display 606) to the processor 604.

According to certain embodiments, a method for data mapping is provided. In some examples, the method includes receiving the unstructured data including text data; generating an extraction prompt using the unstructured data; providing the extraction prompt to a generative artificial intelligence (GenAI) model; receiving one or more extracted data parts from the GenAI model; for each data part of the one or more extracted data parts, generating a description prompt based on the each data part; providing the description prompt to the GenAI model; receiving a keyword description for the each data part from the GenAI model; accessing a hierarchical data model, the hierarchical data model including one or more sub-hierarchies, at least one of the one or more sub-hierarchies including a plurality of levels of structure elements; obtaining one or more highest-level structure elements in the hierarchical data model, each highest-level structure element of the one or more highest-level structure elements corresponding to one of the one or more sub-hierarchies; generating a search prompt using the unstructured data and the one or more highest-level structure elements; providing the search prompt to the GenAI model; receiving one or more identified highest-level structure elements from the GenAI model, the one or more identified highest-level structure elements corresponding to one or more identified sub-hierarchies; for each data part of the one or more extracted data parts, traversing each identified sub-hierarchy of the one or more identified sub-hierarchies to determine a list of relevant structure elements in the hierarchical data model based on a relevance scoring; and generating a mapping prompt based on the list of relevant structure elements and the unstructured data. The method is performed using one or more processors. For example, the method is implemented according to at least FIG. 1, FIG. 2, and/or FIG. 3.

In some embodiments, the method further comprises providing the mapping prompt to GenAI model; and receiving a mapped structure element from the GenAI model. In certain embodiments, the methods further comprises providing the mapped structure element to a user; receiving an input associated with the mapped structure element; in response to the input indicating an approval, generating a keyword based on the input and the mapped structure element; and appending the keyword to a corpus associated with the mapped structure element, wherein the corpus is used in a subsequent relevance scoring. In some embodiments, the method further comprises: in response to the input not indicating an approval, generating a keyword based on the input; and appending the keyword to a corpus associated with a structure element different from the mapped structure element, wherein the corpus is used in the subsequent relevance scoring.

In some embodiments, the method further comprises: for each data part of the one or more extracted data parts, computing an embedding corresponding to the each data part based on the keyword description. In certain embodiments, the traversing each identified sub-hierarchy of the one or more identified sub-hierarchies to determine a list of relevant structure elements includes: for each data part of the one or more extracted data parts, determining a relevance score for each structure element in the each identified sub-hierarchy; and selecting a list of relevant structure elements based on determined relevance scores. In some embodiments, each relevant structure element has a relevance score within top N relevance scores, wherein N is an integer.

In certain embodiments, each relevant structure element has a relevance score higher than a predetermined threshold. In some embodiments, the determining a relevance score for each structure element in the each identified sub-hierarchy includes: determining a similarity score based on the embedding corresponding to the each extracted data part and an embedding corresponding to the each structure element; and determining the relevance score based on the similarity score. In certain embodiments, the determining a relevance score for each structure element in the each identified sub-hierarchy includes: determining an NLP (natural-language-processing) relevance score based on the keyword description corresponding to the each extracted data part and a corpus corresponding to the each structure element; and determining the relevance score based on the NLP relevance score.

In some embodiments, the determining a relevance score for each structure element in the each identified sub-hierarchy further includes: determining a similarity score based on the embedding corresponding to the each extracted data part and an embedding corresponding to the each structure element; and determining the relevance score based on the NLP relevance score and the similarity score. In certain embodiments, the relevance score is a weighted score based on the NLP relevance score and the similarity score. In some embodiments, the NLP relevance score includes a TF-IDF (term-frequency-inverse-document-frequency) score. In some embodiments, the method further comprises receiving a configuration input to the hierarchical data model; and updating the hierarchical data model based on the configuration input.

According to certain embodiments, a system for data mapping is provided. In some examples, the system includes: one or more memories comprising instructions stored thereon; and one or more processors configured to execute the instructions and perform a set of operations comprising: receiving the unstructured data including text data; generating an extraction prompt using the unstructured data; providing the extraction prompt to a generative artificial intelligence (GenAI) model; receiving one or more extracted data parts from the GenAI model; for each data part of the one or more extracted data parts, generating a description prompt based on the each data part; providing the description prompt to the GenAI model; receiving a keyword description for the each data part from the GenAI model; accessing a hierarchical data model, the hierarchical data model including one or more sub-hierarchies, at least one of the one or more sub-hierarchies including a plurality of levels of structure elements; obtaining one or more highest-level structure elements in the hierarchical data model, each highest-level structure element of the one or more highest-level structure elements corresponding to one of the one or more sub-hierarchies; generating a search prompt using the unstructured data and the one or more highest-level structure elements; providing the search prompt to the GenAI model; receiving one or more identified highest-level structure elements from the GenAI model, the one or more identified highest-level structure elements corresponding to one or more identified sub-hierarchies; for each data part of the one or more extracted data parts, traversing each identified sub-hierarchy of the one or more identified sub-hierarchies to determine a list of relevant structure elements in the hierarchical data model based on a relevance scoring; and generating a mapping prompt based on the list of relevant structure elements and the unstructured data. For example, the system is implemented according to at least FIG. 1, FIG. 2, and/or FIG. 3.

In some embodiments, the set of operations further comprise: providing the mapping prompt to GenAI model; and receiving a mapped structure element from the GenAI model. In certain embodiments, the methods further comprises providing the mapped structure element to a user; receiving an input associated with the mapped structure element; in response to the input indicating an approval, generating a keyword based on the input and the mapped structure element; and appending the keyword to a corpus associated with the mapped structure element, wherein the corpus is used in a subsequent relevance scoring. In some embodiments, the set of operations further comprise: in response to the input not indicating an approval, generating a keyword based on the input; and appending the keyword to a corpus associated with a structure element different from the mapped structure element, wherein the corpus is used in the subsequent relevance scoring.

In some embodiments, the set of operations further comprise: for each data part of the one or more extracted data parts, computing an embedding corresponding to the each data part based on the keyword description. In certain embodiments, the traversing each identified sub-hierarchy of the one or more identified sub-hierarchies to determine a list of relevant structure elements includes: for each data part of the one or more extracted data parts, determining a relevance score for each structure element in the each identified sub-hierarchy; and selecting a list of relevant structure elements based on determined relevance scores. In some embodiments, each relevant structure element has a relevance score within top N relevance scores, wherein N is an integer.

In certain embodiments, each relevant structure element has a relevance score higher than a predetermined threshold. In some embodiments, the determining a relevance score for each structure element in the each identified sub-hierarchy includes: determining a similarity score based on the embedding corresponding to the each extracted data part and an embedding corresponding to the each structure element; and determining the relevance score based on the similarity score. In certain embodiments, the determining a relevance score for each structure element in the each identified sub-hierarchy includes: determining an NLP (natural-language-processing) relevance score based on the keyword description corresponding to the each extracted data part and a corpus corresponding to the each structure element; and determining the relevance score based on the NLP relevance score.

In some embodiments, the determining a relevance score for each structure element in the each identified sub-hierarchy further includes: determining a similarity score based on the embedding corresponding to the each extracted data part and an embedding corresponding to the each structure element; and determining the relevance score based on the NLP relevance score and the similarity score. In certain embodiments, the relevance score is a weighted score based on the NLP relevance score and the similarity score. In some embodiments, the NLP relevance score includes a TF-IDF (term-frequency-inverse-document-frequency) score. In some embodiments, the set of operations further comprise receiving a configuration input to the hierarchical data model; and updating the hierarchical data model based on the configuration input.

According to certain embodiments, a non-transitory computer-readable storage medium having instructions for data mapping that, when executed by one or more processors, cause the one or more processors to perform a set of operations comprising: receiving the unstructured data including text data; generating an extraction prompt using the unstructured data; providing the extraction prompt to a generative artificial intelligence (GenAI) model; receiving one or more extracted data parts from the GenAI model; for each data part of the one or more extracted data parts, generating a description prompt based on the each data part; providing the description prompt to the GenAI model; receiving a keyword description for the each data part from the GenAI model; accessing a hierarchical data model, the hierarchical data model including one or more sub-hierarchies, at least one of the one or more sub-hierarchies including a plurality of levels of structure elements; obtaining one or more highest-level structure elements in the hierarchical data model, each highest-level structure element of the one or more highest-level structure elements corresponding to one of the one or more sub-hierarchies; generating a search prompt using the unstructured data and the one or more highest-level structure elements; providing the search prompt to the GenAI model; receiving one or more identified highest-level structure elements from the GenAI model, the one or more identified highest-level structure elements corresponding to one or more identified sub-hierarchies; for each data part of the one or more extracted data parts, traversing each identified sub-hierarchy of the one or more identified sub-hierarchies to determine a list of relevant structure elements in the hierarchical data model based on a relevance scoring; and generating a mapping prompt based on the list of relevant structure elements and the unstructured data. For example, the non-transitory computer-readable storage medium is implemented according to at least FIG. 1, FIG. 2, and/or FIG. 3.

In some embodiments, the set of operations further comprise: providing the mapping prompt to GenAI model; and receiving a mapped structure element from the GenAI model. In certain embodiments, the methods further comprises providing the mapped structure element to a user; receiving an input associated with the mapped structure element; in response to the input indicating an approval, generating a keyword based on the input and the mapped structure element; and appending the keyword to a corpus associated with the mapped structure element, wherein the corpus is used in a subsequent relevance scoring. In some embodiments, the set of operations further comprise: in response to the input not indicating an approval, generating a keyword based on the input; and appending the keyword to a corpus associated with a structure element different from the mapped structure element, wherein the corpus is used in the subsequent relevance scoring.

In some embodiments, the set of operations further comprise: for each data part of the one or more extracted data parts, computing an embedding corresponding to the each data part based on the keyword description. In certain embodiments, the traversing each identified sub-hierarchy of the one or more identified sub-hierarchies to determine a list of relevant structure elements includes: for each data part of the one or more extracted data parts, determining a relevance score for each structure element in the each identified sub-hierarchy; and selecting a list of relevant structure elements based on determined relevance scores. In some embodiments, each relevant structure element has a relevance score within top N relevance scores, wherein N is an integer.

In certain embodiments, each relevant structure element has a relevance score higher than a predetermined threshold. In some embodiments, the determining a relevance score for each structure element in the each identified sub-hierarchy includes: determining a similarity score based on the embedding corresponding to the each extracted data part and an embedding corresponding to the each structure element; and determining the relevance score based on the similarity score. In certain embodiments, the determining a relevance score for each structure element in the each identified sub-hierarchy includes: determining an NLP (natural-language-processing) relevance score based on the keyword description corresponding to the each extracted data part and a corpus corresponding to the each structure element; and determining the relevance score based on the NLP relevance score.

In some embodiments, the determining a relevance score for each structure element in the each identified sub-hierarchy further includes: determining a similarity score based on the embedding corresponding to the each extracted data part and an embedding corresponding to the each structure element; and determining the relevance score based on the NLP relevance score and the similarity score. In certain embodiments, the relevance score is a weighted score based on the NLP relevance score and the similarity score. In some embodiments, the NLP relevance score includes a TF-IDF (term-frequency-inverse-document-frequency) score. In some embodiments, the set of operations further comprise receiving a configuration input to the hierarchical data model; and updating the hierarchical data model based on the configuration input.

For example, some or all components of various embodiments of the present disclosure each are, individually and/or in combination with at least another component, implemented using one or more software components, one or more hardware components, and/or one or more combinations of software and hardware components. In an example, some or all components of various embodiments of the present disclosure each are, individually and/or in combination with at least another component, implemented in one or more circuits, such as one or more analog circuits and/or one or more digital circuits. In an example, while the embodiments described above refer to particular features, the scope of the present disclosure also includes embodiments having different combinations of features and embodiments that do not include all of the described features. In an example, various aspects of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations, one or more features from a combination can in some cases be removed from the combination, and a combination may, for example, be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method for data mapping, the method comprising:
receiving unstructured data including text data;
generating an extraction prompt using the unstructured data;
providing the extraction prompt to a generative artificial intelligence (GenAI) model;
receiving one or more extracted data parts from the GenAI model;
for each data part of the one or more extracted data parts,
generating a description prompt based on the respective data part;
providing the description prompt to the GenAI model;
receiving a keyword description for the respective data part from the GenAI model;
accessing a hierarchical data model, the hierarchical data model including one or more sub-hierarchies, at least one of the one or more sub-hierarchies including a plurality of levels of structure elements;
obtaining one or more highest-level structure elements in the hierarchical data model, each highest-level structure element of the one or more highest-level structure elements corresponding to one of the one or more sub-hierarchies;
generating a search prompt using the unstructured data and the one or more highest-level structure elements;
providing the search prompt to the GenAI model;
receiving one or more identified highest-level structure elements from the GenAI model, the one or more identified highest-level structure elements corresponding to one or more identified sub-hierarchies;
for each data part of the one or more extracted data parts, traversing each identified sub-hierarchy of the one or more identified sub-hierarchies to determine a list of relevant structure elements in the hierarchical data model based on a relevance scoring; and
generating a mapping prompt based on the list of relevant structure elements and the unstructured data;
wherein the method is performed using one or more processors.

2. The method of claim 1, further comprising:
providing the mapping prompt to GenAI model; and
receiving a mapped structure element from the GenAI model.

3. The method of claim 2, further comprising:
providing the mapped structure element to a user;
receiving an input associated with the mapped structure element;
in response to the input indicating an approval, generating a keyword based on the input and the mapped structure element; and
appending the keyword to a corpus associated with the mapped structure element, wherein the corpus is used in a subsequent relevance scoring.

4. The method of claim 3, further comprising:
in response to the input not indicating an approval, generating a keyword based on the input; and
appending the keyword to a corpus associated with a structure element different from the mapped structure element, wherein the corpus is used in the subsequent relevance scoring.

5. The method of any of claims 1 to 4, further comprising:
for each data part of the one or more extracted data parts,
computing an embedding corresponding to the respective data part based on the keyword description.

6. The method of claim 5, wherein the traversing each identified sub-hierarchy of the one or more identified sub-hierarchies to determine a list of relevant structure elements includes:
for each data part of the one or more extracted data parts, determining a relevance score for each structure element in the respective identified sub-hierarchy; and
selecting a list of relevant structure elements based on determined relevance scores.

7. The method of claim 6, wherein each relevant structure element has a relevance score within top N relevance scores, wherein N is an integer, and/or
wherein each relevant structure element has a relevance score higher than a predetermined threshold.

8. The method of claim 6, wherein the determining a relevance score for each structure element in the respective identified sub-hierarchy includes:
determining a similarity score based on the embedding corresponding to the respective extracted data part and an embedding corresponding to the respective structure element; and
determining the relevance score based on the similarity score.

9. The method of claim 6, wherein the determining a relevance score for each structure element in the respective identified sub-hierarchy includes:
determining an NLP (natural-language-processing) relevance score based on the keyword description corresponding to the respective extracted data part and a corpus corresponding to the respective structure element; and
determining the relevance score based on the NLP relevance score.

10. The method of claim 9, wherein the determining a relevance score for each structure element in the respective identified sub-hierarchy further includes:
determining a similarity score based on the embedding corresponding to the respective extracted data part and an embedding corresponding to the respective structure element; and
determining the relevance score based on the NLP relevance score and the similarity score.

11. The method of claim 10, wherein the relevance score is a weighted score based on the NLP relevance score and the similarity score.

12. The method of claim 10 or 11, wherein the NLP relevance score includes a TF-IDF (term-frequency-inverse-document-frequency) score.

13. The method of claim any preceding claim, further comprising:
receiving a configuration input to the hierarchical data model; and
updating the hierarchical data model based on the configuration input.

14. A system for data mapping, the system comprising:
one or more memories comprising instructions stored thereon; and
one or more processors configured to execute the instructions and perform a set of operations comprising the method of any preceding claim.

15. A non-transitory computer-readable storage medium having instructions for data mapping that, when executed by one or more processors, cause the one or more processors to perform operations comprising the method of any of claims 1 to 14.
